# NEUE EUROPÄISCHE PATENTSCHRIFT

(11) **EP 0 713 433 B2**
(45) Veröffentlichungstag und Bekanntmachung des Hinweises auf die Entscheidung über den Einspruch: **17.10.2001**
(45) Hinweis auf die Patenterteilung: 01.04.1998
(21) Anmeldenummer: 94924279.6
(22) Anmeldetag: 22.07.1994
(51) Int. Cl.: B23K 26/08, G05B 19/42

(54) **VERFAHREN ZUM GRAVIEREN EINES MUSTERS IN EINE OBERFLÄCHE EINES WERKSTÜCKS**
PROCESS FOR ENGRAVING A PATTERN IN A SURFACE OF A WORKPIECE
PROCEDURE POUR GRAVER UN MOTIF DANS LA SURFACE D'UNE PIECE

(30) Priorität: 11.08.1993 DE 4326874
(43) Veröffentlichungstag der Anmeldung: 29.05.1996
(73) Patentinhaber: Benecke-Kaliko Aktiengesellschaft, D-30419 Hannover (DE)
(72) Erfinder: HINRICHS, Hans-Helmut, D-29223 Celle (DE); MINKE, Jürgen, D-30853 Langenhagen (DE); LANGE, Günter, D-30419 Hannover (DE); MOMMSEN, Jens, D-29352 Adelheidsdorf (DE); OVERMEYER, Ludger, D-30926 Letter (DE); OBERT, Markus, D-30457 Hannover (DE)
(74) Vertreter: Leine, Sigurd, Dipl.-Ing.
(86) Internationale Anmeldenummer: EP9402430
(87) Internationale Veröffentlichungsnummer: WO9504626

(56) Entgegenhaltungen:
- DE-A- 4 039 132
- DE-A- 4 041 105
- US-A- 3 739 088
- US-A- 4 629 858
- US-A- 4 977 512
- Messezeitschrift "Newspoint der Fa. Stork"

## Beschreibung

Die Erfindung betrifft ein Verfahren der im Oberbegriff des Anspruchs 1 genannten Art zum Gravieren eines Musters in eine Oberfläche eines Werkstücks. Ein solches Verfahren ist z.B. aus der Messezeitschrift "Newspoint" (erhältlich an der ITMA 91 in Hannover) der Fa. Stork bekannt.

Durch US 4 156 124 sind eine Einrichtung und ein Verfahren zum kontaktfreien Gravieren mittels eines Lasers bekannt. Ein Laserstrahl wird über eine Maskenanordnung auf die Oberfläche eines Werkstücks gerichtet. Die Maske kann transparent oder reflektierend sein. Der Laserstrahl wird mittels einer Optik übertragen und so das Bild der Maske auf die Oberfläche des Werkstücks geworfen. Maske und Werkstück werden in einer festen Abstandsposition parallel zueinander gehalten. Die Laserstrahlquelle wird relativ zur Maske und Werkstückoberfläche bewegt, so daß der Laserstrahl über die Maske und somit die Oberfläche des Werkstücks wandert. Durch die Maske wird die Intensität des Laserstrahls ortsabhängig verändert und somit auch die Einwirkung des Laserstrahls auf die Oberfläche, in die so das durch die Maske vorgegebene Muster eingraviert wird. Mittels eines solchen Verfahrens und einer solchen Anordnung lassen sich nur einfache und grobe Muster gravieren. Außerdem ist die Herstellung der Masken kompliziert und aufwendig. Die Masken sind endlich, so daß auch nur endliche Muster graviert werden können.

Durch US 4 734 558 ist eine Einrichtung zum Eingravieren verschiedener Arten von Beschriftungen in eine Oberfläche bekannt. Der von einem Laser kommende Strahl wird zu einem Parallelstrahl erweitert, der durch eine ortsspezifisch steuerbare, als Blende wirkende Maske läuft, die der einzugravierenden Beschriftung entspricht. Das Bild der Maske wird auf die zu gravierende Oberfläche geworfen. Die Maske ist ein Lichtventil in Form eines Flüssigkristalls, dessen Durchlässigkeit ortsabhängig durch ein von dem Schirm einer Kathodenstrahlröhre auf den Flüssigkeitskristall geworfenes Bild gesteuert wird. Das Bild auf der Kathodenstrahlröhre, das dem zu gravierenden Zeichen entspricht, wird von einem Mikrocomputer geliefert. In diesem sind mehrere zu gravierende Speichen eingespeichert, die durch von Hand zu betätigende Schalter auswählbar sind.

Bei dieser bekannten Vorrichtung werden also Metallmasken durch eine von einem Maskengenerator gesteuerte optische Maske ersetzt. Die zu gravierenden Zeichen sind einfacher Natur und müssen zuvor in den Maskengenerator durch ein besonderes Programm eingespeichert werden.

Durch DE 42 13 106 A1 ist ein Verfahren im wesentlichen ähnlich der zuvor beschriebenen Art bekannt, bei der die Maske ebenfalls variierbar ist. Die Variation erfolgt durch eine unterschiedliche digitale Ansteuerung. Das Gravieren erfolgt schichtenweise nacheinander. Die numerische Steuerung der Maske läßt nur einfache Maskenbilder und damit Gravurmuster zu. Die numerische Steuerung wird beispielsweise durch ein oder mehrere, sich drehende Lochscheiben bewirkt, deren Lochbilder in bestimmter Konfiguration zur Deckung kommen. Die Muster sind also immer regelmäßig. Kleine Bildelemente werden zu größeren Bildfeldern zusammengesetzt, in denen sie aufgrund ihrer Regelmäßigkeit nahtlos ineinander übergehen. Bei unregelmäßigen Mustern ist ein solches Zusammensetzen von Bildelementen zu größeren Bildfeldern ohne Auftreten von sichtbaren Stoßlinien nicht möglich.

Durch US 4 629 858 ist ein Verfahren bekannt, bei dem ein Muster auf einem Papierbogen zeilenförmig abgetastet und mit dem abgetasteten Signal die Intensität eines Lasers gesteuert wird, der in gleicher Weise zeilenförmig über ein Werkstück in Form eines Teppichs geführt wird, so daß in dessen Oberfläche ein Flächenmuster entsprechend dem Farbmuster auf der Papiervorlage eingebrannt wird. Die Mustervorlage hat dabei eine Größe entsprechend der Größe des Werkstücks. Eine Bearbeitung eines Werkstücks mit einer Fläche, die größer ist als die der Mustervorlage, ist nicht möglich.

Durch US 3 739 088 ist ein Verfahren bekannt, das nach den gleichen Prinzipien arbeitet wie das vorgenannte Verfahren und zur Herstellung von Druckplatten dient. Auch hier entspricht die Fläche der Mustervorlage selbstverständlich der Fläche der herzustellenden Druckplatte.

Der Erfindung liegt die Aufgabe zugrunde, ein Verfahren der im Oberbegriff des Anspruchs 1 genannten Art anzugeben, das einfach durchzuführen, auch für komplizierte, insbesondere unregelmäßige Muster geeignet ist und mit dem eine Fläche auf dem Werkstück graviert werden kann, die größer als die der Mustervorlage ist.

Die der Erfindung zugrundeliegende Aufgabe wird durch die im Kennzeichen des Anspruchs 1 angegebene Lehre gelöst.

Der Grundgedanke der erfindungsgemäßen Lehre besteht darin, daß die von der Mustervorlage gewonnene Oberflächeninformation gespeichert und wenigstens zweimal abgerufen und damit wenigstens zwei an einer Stoßlinie aneinandergrenzende Oberflächenbereiche auf dem Werkstück graviert werden. Somit läßt sich der von der Mustervorlage abgetastete Oberflächenbereich auf dem Werkstück verdoppeln oder beliebig vervielfältigen. Das nicht nur in einer Richtung, bei der sich mehrere Muster, die jeweils dem abgetasteten Oberflächenbereich entsprechen, in einer Reihe aneinanderfügen, sondern auch in zwei Richtungen, so daß die gravierte Gesamtfläche entsprechend vergrößert wird. Ist das in dem Oberflächenbereich der Mustervorlage abgetastete Muster einfach und/oder sind die Grenzen des Oberflächenbereichs günstig ausgewählt, so tritt eine Stoßlinie zwischen zwei aneinandergrenzenden Oberflächenbereichen auf dem Werkstück nicht in Erscheinung. Fügen sich die Muster an einer Stoßlinie zwischen zwei aneinandergrenzenden Oberflächenbereichen nicht übergangslos und unsichtbar aneinander, so ist es gemäß einer zweckmäßigen Weiterbildung der Erfindung vorteilhaft, wenn die gespeicherte Oberflächeninformation beim zweiten Abruf rückwärts und gegebenenfalls bei weiteren Abrufen abwechselnd vorwärts und rückwärts gelesen wird, derart, daß beim Gravieren eine Spiegelung des Musters an der Stoßlinie bzw. den Stoßlinien erfolgt.

In allen Fällen, in denen die dem Oberflächenbereich einer Mustervorlage entsprechende Oberflächeninformation wenigstens zweimal abgerufen wird, ist es zweckmäßig, daß die Oberflächeninformation in den Informationsbereichen, die der Stoßlinie bzw. den Stoßlinien zwischen den Oberflächenbereichen auf dem Werkstück benachbart sind, aufbereitet wird, derart, daß im Bereich der Stoßlinie ein stetiger und für das menschliche Auge möglichst unsichtbarer Übergang erzeugt wird. Diese Aufbereitung kann grundsätzlich in beliebiger Weise erfolgen, z.B. durch eine Bedienungsperson gesteuert unter Sichtkontrolle, was schon ein kunsthandwerklicher Vorgang sein kann. Eine besonders zweckmäßige Ausführungsform der Aufbereitung besteht jedoch darin, daß die dem abgetasteten Oberflächenbereich der Mustervorlage auf dem Werkstück entsprechende Oberflächenbereiche durch entsprechenden, sich vorzugsweise zeitlich überlappenden Abruf der gespeicherten Oberflächeninformation an der Stoßlinie bzw. den Stoßlinien zur Überlappung gebracht werden und daß die Steuersignale in diesem Überlappungsbereich wechselseitig kontinuierlich abgesenkt bzw. angehoben werden, derart, daß ein im wesentlichen kontinuierlicher, unsichtbarer Übergang des Musters über die Stoßlinie hinweg gebildet wird. Das bedeutet mit anderen Worten, daß im Bereich der Stoßlinie bzw. der Stoßlinien ein Überblenden der Muster erfolgt.

Eine andere Ausführungsform des erfindungsgemäßen Verfahrens zur Erzielung eines unsichtbaren Übergangs zwischen benachbarten gravierten Oberflächenbereichen auf dem Werkstück ähnlich der zuvor genannten Ausführungsform besteht darin, daß die Steuersignale für den Laserstrahl in einem an die Stoßlinie angrenzenden Übergangsbereich von beiden Seiten zu der Stoßlinie hin kontinuierlich abgeschwächt bzw. wieder angehoben werden, wobei den Steuersignalen im Übergangsbereich Übergangssteuersignale hinzugefügt werden, die von der Oberfläche der Information der Mustervorlage abgeleitet sind und umgekehrt wie die Steuersignale im Übergangsbereich kontinuierlich angehoben und wieder abgesenkt werden, derart, daß ein im wesentlichen kontinuierlicher, unsichtbarer Übergang des Musters über die Stoßlinie hinweg gebildet wird.

Als Mustervorlage kann zweckmäßigerweise ein natürliches Muster, insbesondere die Narbung einer natürlichen Ledervorlage verwendet werden. Das Werkstück kann eine Prägewalze insbesondere zum kontinuierlichen Prägen einer Bahn thermoplastischer Folie sein. Hierbei lassen sich mit besonderem Vorteil die Verfahrensformen anwenden, die einen stoßfreien Übergang des Musters an einer Stoßlinie bewirken. Es läßt sich so ein über den Umfang der Prägewalze kontinuierliches Prägemuster erzeugen. Soll die Prägung in Abhängigkeit von einer natürlichen Mustervorlage, z.B. der Narbung einer natürlichen Ledervorlage, erfolgen, so muß die Prägeoberfläche ein Negativ der natürlichen Mustervorlage sein. Um dieses zu erreichen, ist es gemäß einer Ausführungsform dieser Weiterbildung der Erfindung zweckmäßig, die Steuersignale für den Laserstrahl zu invertieren.

Anhand der Zeichnung soll das erfindungsgemäße Verfahren näher erläutert werden.
- Fig. 1: zeigt schematisch eine Mustervorlage,
- Fig. 2: dient der Erläuterung der Abtastung der Mustervorlage gemäß Fig. 1,
- Fig. 3: verdeutlicht das Gravieren einer Oberfläche mit einer mehrfach abgerufenen Oberflächeninformation,
- Fig. 4: verdeutlicht schematisch das Gravieren der Oberfläche einer Prägewalze, und
- Fig. 5: zeigt schematisch die gravierte Prägewalze.

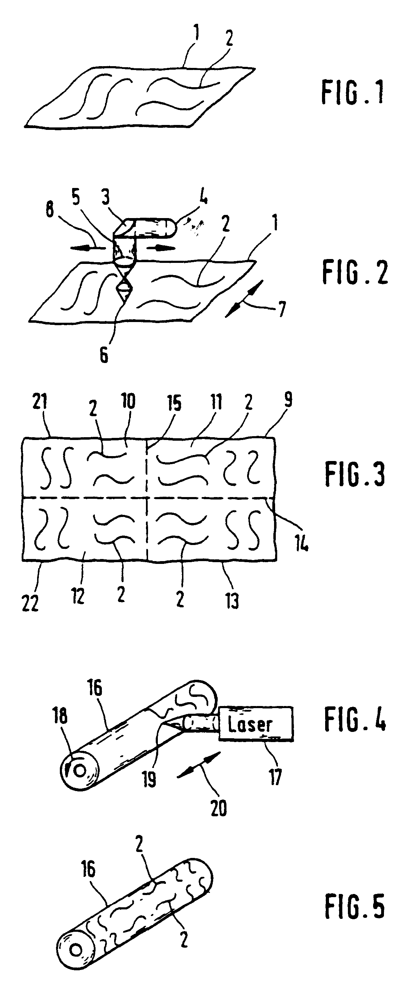

In Fig. 1 ist eine Mustervorlage 1 gezeigt, die aus natürlichem Leder besteht und deren Oberfläche eine natürliche Narbung 2 hat, die schematisch angedeutet ist.

Fig. 2 verdeutlicht die Abtastung der Narbung 2 der Mustervorlage 1 gemäß Fig. 1 durch ein Fokuslagenmeßsystem 3, wie es allgemein aus der Längenmeßtechnik bekannt ist. Das Fokuslagenmeßsystem 3 weist einen Laser 4 auf, dessen Strahl über ein optisches System 5 auf der Oberfläche der Mustervorlage 1 in einem Punkt 6 fokussiert ist.

Die Mustervorlage 1 wird in Richtung eines Pfeiles 7 und das Fokuslagenmeßsystem 3 in Richtung von Pfeilen 8 bewegt, derart, daß der Punkt 6 zellenförmig über die Oberfläche der Mustervorlage 1 wandert und so die Narbung 2 abtastet. Das Fokuslagenmeßsystem 3 gibt dabei fortlaufend elektrische Steuersignale ab, die unmittelbar zur Steuerung der Stärke eines Laserstrahls verwendet werden können. Die Steuerung des Laserstrahls kann in beliebiger bekannter Weise erfolgen, beispielsweise nach den eingangs beim Stand der Technik geschilderten Verfahren.

Fig. 3 zeigt schematisch ein Gravurbild auf der Oberfläche eines Werkstücks 9. Es ist zu erkennen, daß die von der Narbung 2 stammende Oberflächeninformation mehrmals in die Oberfläche des Werkstücks 9 eingeprägt ist, derart, daß die durch die Narbung 2 gebildeten Muster an durch gestrichelte Linien angedeuteten Stoßlinien 14 und 15 gespiegelt sind.

Durch Fig. 3 läßt sich nicht darstellen, und deshalb wird hier erläutert, daß im Bereich der Stoßlinien 14 und 15 die bei der Gravur verwendeten Steuersignale, die mehrfach abgerufen worden sind, aufbereitet worden sind, derart, daß im Bereich der Stoßlinien 14, 15 ein stetiger und für das menschliche Auge möglichst unsichtbarer Übergang erzeugt ist. Zu diesem Zweck Überlappen sich die Steuersignale und sind hier wechselseitig kontinuierlich abgesenkt bzw. angehoben, so daß die Narbung von der einen Seite beispielsweise der Stoßlinie 14 mit gleicher Gravurtiefe kontinuierlich in die Narbung auf der anderen Seite der Stoßlinie 14 übergeht.

Fig. 4 zeigt eine Walze 16, in deren Oberfläche durch einen Laser 17 ein Muster entsprechend der Darstellung in Fig. 3 eingraviert wird. Die Walze 16 wird bei der Gravur ständig in Richtung eines Pfeiles 18 gedreht, während der Laser 17 mit seinem Fokus 19 langsam in Achsrichtung und in Richtung eines Pfeiles 20 fortschreitet.

Bei dieser endlosen Gravur entsteht eine weitere Stoßlinie zwischen Kanten 21 und 22 der Darstellung in Fig. 3. An dieser Stoßlinie werden die Steuersignale natürlich wieder in gleicher Weise wie an der Stoßlinie 14 wechselseitig kontinuierlich abgesenkt bzw. angehoben, so daß ein kontinuierlicher und für das menschliche Auge möglichst unsichtbarer Übergang des Narbungsmusters über die Stoßlinie hinweg erzeugt wird.

Fig. 5 zeigt schematisch die fertig gravierte Walze 16.

## Patentansprüche

1. Verfahren zum Gravieren eines Musters in eine Oberfläche eines Werkstückes (9) mittels eines auf die Oberfläche des Werkstücks gerichteten, in Abhängigkeit von dem Muster ortsabhängig in seiner Stärke gesteuerten Laserstrahls.
bei dem ein Oberflächenbereich einer Mustervorlage (1) optisch oder mechanisch abgetastet und die so gewonnene Oberflächeninformation in elektrische Steuersignale umgewandelt wird,
die den Laserstrahl in einem dem Oberflächenbereich der Mustervorlage (1) entsprechenden Oberflächenbereich steuern,
wobei die von der Mustervorlage (1) gewonnene Oberflächeninformation gespeichert wird und
wobei die gespeicherte Oberflächeninformation wenigstens zweimal abgerufen und damit wenigstens zwei an einer Stoßlinie (14, 15) aneinandergrenzende Oberflächenbereiche auf dem Werkstück (9) graviert werden,
**dadurch gekennzeichnet, daß** die Oberflächeninformation als eine die 3D-Struktur der Mustervorlage wiedergebende Tiefeninformation über die Oberfläche der Mustervorlage gewonnen und gespeichert wird.

2. Verfahren nach Anspruch 1, **dadurch gekennzeichnet, daß** die gespeicherte Oberflächeninformation beim zweiten Abrufen rückwärts und gegebenenfalls bei weiteren Abrufen abwechselnd vorwärts und rückwärts gelesen wird, derart, daß beim Gravieren eine Spiegelung des Musters an der Stoßlinie bzw. den Stoßlinien (14, 15) erfolgt.

3. Verfahren nach Anspruch 1 oder 2, **dadurch gekennzeichnet, daß** die wenigstens zweimal abgerufene Oberflächeninformation in den Informationsbereichen, die der Stoßlinie bzw. den Stoßlinien (14, 15) zwischen den Oberflächenbereichen auf dem Werkstück (9) benachbart sind, aufbereitet wird, derart, daß im Bereich der Stoßlinie ein stetiger und für das menschliche Auge möglichst unsichtbarer Übergang erzeugt wird.

4. Verfahren nach Anspruch 3, **dadurch gekennzeichnet, daß** die dem abgetasteten Oberflächenbereich der Mustervorlage (1) auf dem Werkstück (9) entsprechenden Oberflächenbereiche durch entsprechenden, sich vorzugsweise zeitlich überlappenden Abruf der gespeicherten Oberflächeninformation an der Stoßlinie bzw. den Stoßlinien (14, 15) zur Überlappung gebracht werden und daß die Steuersignale in diesem Überlappungsbereich wechselseitig kontinuierlich abgesenkt bzw. angehoben werden, derart, daß ein im wesentlichen kontinuierlicher, unsichtbarer Übergang des Musters über die Stoßlinie hinweg gebildet wird.

5. Verfahren nach Anspruch 3, **dadurch gekennzeichnet.**
daß die Steuersignale für den Laserstrahl in einem an die Stoßlinie (14,15) angrenzenden Übergangsbereich von beiden Seiten zu der Stoßlinie hin kontinuierlich abgeschwächt bzw. wieder angehoben werden, und
daß den Steuersignalen im Übergangsbereich Übergangssteuersignale hinzugefügt werden, die von der Oberflächeninformation der Mustervorlage (1) abgeleitet sind und umgekehrt wie die Steuersignale im Übergangsbereich kontinuierlich angehoben und wieder abgesenkt werden, derart, daß ein im wesentlichen kontinuierlicher, unsichtbarer Übergang des Musters über die Stoßlinie hinweg gebildet wird.

6. Verfahren nach Anspruch 1, **dadurch gekennzeichnet, daß** als Mustervorlage (1) ein natürliches Muster, insbesondere die Narbung (2) einer natürlichen Ledervorlage verwendet wird.

7. Verfahren nach Anspruch 1, **dadurch gekennzeichnet, daß** die Steuersignale invertiert werden und daß das Werkstück eine Prägewalze (16) insbesondere zum kontinuierlichen Prägen einer Bahn thermoplastischer Folie ist.

## Claims

1. A process for engraving a pattern in a surface of a workpiece (9) by means of a laser beam directed onto the surface of the workpiece and controlled in a location-dependent manner with respect to its intensity in dependence on the pattern,
in which one surface region of a pattern model (1) is optically or mechanically scanned and the surface information thus obtained is converted into electrical control signals,
which control the laser beam in a surface region corresponding to the surface region of the pattern model (1),
the surface information obtained from the pattern model (1) being stored and
the stored surface information being fetched at least twice and consequently at least two surface regions adjoining one another at an abutment line (14, 15) being engraved on the workpiece (9),
**characterised in that** the surface information is obtained and stored as an item of information on the depth of the surface of the pattern model which reproduces the 3D structure of the pattern model.

2. A process according to Claim 1,
**characterised in that** the stored surface information is read backwards during the second fetching operation and where appropriate during further fetching operations is read alternately forwards and backwards, so that during engraving a reflection of the pattern occurs at the abutment line or the abutment lines (14, 15) respectively.

3. A process according to Claim 1 or 2,
**characterised in that** the surface information fetched at least twice in the information regions which are adjacent to the abutment line or the abutment lines (14, 15) respectively between the surface regions on the workpiece (9) is processed so that in the region of the abutment line a continuous transition which is as far as possible invisible to the human eye is produced.

4. A process according to Claim 3,
**characterised in that** the surface regions corresponding to the scanned surface region of the pattern model (1) on the workpiece (9) are brought to overlap by corresponding, preferably chronologically overlapping fetching of the stored surface information at the abutment line or the abutment lines (14, 15) respectively,
and **in that** the control signals in this overlapping region are alternately continuously lowered or raised respectively so that a substantially continuous, invisible transition of the pattern across the abutment line is formed.

5. A process according to Claim 3,
**characterised in that**
the control signals for the laser beam are continuously attenuated and raised again in a transitional region adjoining the abutment line (14, 15) from both sides to the abutment line,
and **in that**
to the control signals in the transitional region transitional control signals are added, which are derived from the surface information of the pattern model (1) and vice versa like the control signals in the transitional region are continuously raised and lowered again so that a substantially continuous, invisible transition of the pattern across the abutment line is formed.

6. A process according to Claim 1,
**characterised in that** a natural pattern, in particular the grain (2) of a natural leather model, is used as the pattern model (1).

7. A process according to Claim 1,
**characterised in that** the control signals are inverted, and **in that** the workpiece is an embossing roll (16) in particular for continuously embossing a web of thermoplastic film.

## Revendications

1. Procédé de gravure d'un dessin dans une surface d'une pièce d'oeuvre (9) au moyen d'un faisceau laser dirigé sur la surface de la pièce d'oeuvre, à intensité commandée en dépendance du lieu en fonction du dessin,
dans lequel une zone de surface d'un modèle de dessin (1) est explorée optiquement ou mécaniquement et l'information de surface ainsi acquise est transformée en signaux électriques de commande,
qui commandent le faisceau laser dans une zone de surface correspondant à la zone de surface du modèle de dessin (1), l'information de surface acquise du modèle de dessin (1) étant mémorisée et
l'information de surface mémorisée étant extraite au moins deux fois et, ainsi, au moins deux zones de surface contiguës à une ligne de joint (14, 15) sont gravées sur la pièce d'oeuvre (9),
**caractérisé en ce que** l'information de surface est acquise et mémorisée sous forme d'une information sur le relief reproduisant la structure 3D du modèle de dessin sur la surface du modèle de dessin.

2. Procédé selon la revendication 1,
**caractérisé en ce que** l'information de surface mémorisée est lue en arrière lors de la seconde extraction, et, le cas échéant, alternativement en avant et en arrière dans le cas d'autres extractions, de telle manière qu'il s'ensuit une symétrie du dessin par rapport à la ligne de joint ou respectivement aux lignes de joint (14,15) lors du gravage.

3. Procédé selon la revendication 1 ou 2,
**caractérisé en ce que** l'information de surface extraite au moins deux fois est traitée, dans les zones d'information qui sont adjacentes à la ligne de joint, ou respectivement aux lignes de joint (14, 15), entres les zones de surface sur la pièce d'oeuvre (9), de telle manière qu'il est créé, dans la zone de la ligne de joint, une transition continue et la plus invisible possible pour l'oeil humain.

4. Procédé selon la revendication 3,
**caractérisé en ce que** les zones de surface correspondant sur la pièce d'oeuvre (9) à la zone de surface explorée du modèle de dessin (1) sont amenées en superposition sur la ligne de joint ou respectivement les lignes de joint (14, 15), par extraction correspondante, se superposant avantageusement temporairement, de l'information de surface mémorisée et que les signaux de commande sont alternativement et continuellement abaissés ou respectivement relevés dans cette zone de superposition, de telle manière qu'une transition, essentiellement continue et invisible, du modèle est formée de part et d'autre de la ligne de joint.

5. Procédé selon la revendication 3,
**caractérisé en ce**
**que** les signaux de commande pour le faisceau laser sont continuellement affaiblis ou respectivement relevés dans une zone de transition adjacente à la ligne de joint (14, 15), des deux côtés de la ligne de joint, et que, dans la zone de transition, aux signaux de commande sont ajoutés des signaux de commande de transition qui sont dérivés de l'information de surface du modèle de dessin (1) et sont continuellement relevés et rabaissés à l'inverse des signaux de commande dans la zone de transition, de telle sorte qu'une transition essentiellement continue et invisible du modèle est formée de part et d'autre de la ligne de joint.

6. Procédé selon la revendication 1.
**caractérisé en ce qu'**on utilise comme modèle de dessin (1) un dessin naturel, en particulier la grenure (2) d'un modèle de cuir naturel.

7. Procédé selon la revendication 1,
**caractérisé en ce que** les signaux de commande sont inversés et que la pièce d'oeuvre est un cylindre d'estampage (16), en particulier pour l'estampage continu d'une bande d'une feuille thermoplastique.
